(19) Europäisches Patentamt
European Patent Office
Office européen des brevets

(11) EP 0 847 651 B1

(12) EUROPEAN PATENT SPECIFICATION

(45) Date of publication and mention
of the grant of the patent:
**03.11.1999 Bulletin 1999/44**

(21) Application number: **96930101.9**

(22) Date of filing: **26.08.1996**

(51) Int Cl.⁶: **H04N 7/30**, G06F 17/14

(86) International application number:
**PCT/EP96/03751**

(87) International publication number:
**WO 97/09829 (13.03.1997 Gazette 1997/12)**

(54) **IMAGE PROCESSING METHOD AND CIRCUIT**

BILDVERARBEITUNGSVERFAHREN UND -VORRICHTUNG

PROCEDE ET CIRCUIT DE TRAITEMENT D'IMAGES

(84) Designated Contracting States:
**DE FR GB IT**

(30) Priority: **01.09.1995 GB 9517842**

(43) Date of publication of application:
**17.06.1998 Bulletin 1998/25**

(73) Proprietor: **MOTOROLA, INC.**
**Schaumburg, IL 60196 (US)**

(72) Inventors:
• **YASSA, Fathy**
**CH-1256 Troinex (CH)**
• **CLEMENT, Patrick**
**CH-1030 Bussigny (CH)**

(74) Representative: **Gibson, Sarah Jane et al**
**Motorola**
**European Intellectual Property Operations**
**Midpoint**
**Alencon Link**
**Basingstoke, Hampshire RG21 7PL (GB)**

(56) References cited:
EP-A- 0 514 663          EP-A- 0 572 263
US-A- 5 301 136          US-A- 5 325 215
US-A- 5 329 318          US-A- 5 416 854

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Field of the Invention

This invention relates to image processing and particularly but not exclusively to processing of discrete cosine transform coefficients to reproduce an image.

Background of the Invention

Image compression and decompression techniques, which compress images in order to facilitate efficient transmission are well known. A number of standards exist which define particular compression and decompression methods. For example, the JPEG standard for still images, and the MPEG1 and MPEG2 standards for moving images.
Typically, Discrete Cosine Transform (DCT) functions are used to compress an image into a number of DCT coefficients. The image is typically subdivided into a number of nominal blocks containing picture elements, and the functions are performed on the picture elements of each block. Corresponding inverse DCT (I-DCT) functions are used for subsequent decompression of the DCT coefficients to reconstruct the picture elements of the blocks and hence the image.
Methods for performing the decompression process typically include the use of a block matrix having a specified sequential order, used to compute an inverse quantisation of the coefficients in a two dimensional array to provide intermediate results before performing saturation and mismatch control functions, and the I-DCT function.
For example, the MPEG2 standard specifies that the inverse DCT is performed by a dedicated processor which handles the coefficients using butterfly computations or a row-column method to reconstruct the picture elements.
These methods require a number of cascaded computations, each of which has specific combinations of operands, which are then multiplied by cosine functions. The first computation processes the coefficients together in first specific combinations to provide intermediate results. These are then subject to a second computation, according to a second specific combination, in order to provide further intermediate results, and so on. The intermediate results must be stored in memory after each computation, and reloaded into the processor as required by subsequent steps. The intermediate results must be re-ordered in order to achieve the different specific combinations required by each computation, giving rise to processing delay. The multiple exchanges between processor and memory give rise to further delay.
A further problem with the above method is that the inverse quantisation operation as applied to the two-dimensional array is cumbersome and inefficient, since the array must be accessed element by element. Furthermore, the saturation and mismatch control functions must also be performed on the two-dimensional array and as a result these functions are also slow and inefficient.
This invention seeks to provide an image processing method which mitigates the above mentioned disadvantages.

Summary of the Invention

According to a first aspect of the present invention there is provided a method for processing a sequential set of transform function coefficients to produce an image, the sequential set of transform function coefficients being in a predetermined order, comprising the steps of: performing a weighting step on each one of the set of coefficients in the predetermined order to produce a weighted set of coefficients having the predetermined order; multiplying each one of the weighted set of coefficients by a plurality of transform weighting factors in the predetermined order to produce a plurality of transform weighted coefficients for each one of the weighted set having the predetermined order; and, selectively adding each of the transform weighted coefficients to elements of an accumulator array according to a selection scheme, such that when the processing of the set is completed, the elements of the array define the image.
Preferably the weighting step is an inverse quantisation step, and the weighted set of coefficients are inverse quantised. The plurality of transform weighting factors are preferably inverse-discrete cosine transform values.
Preferably the selection scheme is calculated according to the sequential order of the transform function coefficients. The method preferably further comprises the steps of saturation and mismatch control applied to the weighted set of coefficients.
According to a second aspect of the present invention there is provided an image processing circuit for processing a sequential set of transform domain coefficients to produce an image, the sequential set of transform domain coefficients being in a predetermined order, comprising: a first multiplier stage coupled to receive the set of coefficients, for sequentially multiplying each one of the set of coefficients by a weighting factor in the predetermined order to produce a set of weighted coefficients having the predetermined order; a second multiplier circuit coupled to receive the set of weighted coefficients for sequentially multiplying each one of the set of weighted coefficients by a plurality of transform weighting factors in the predetermined order to produce a plurality of transform weighted coefficients for each one of the set, having the predetermined order; an accumulator array of elements coupled to the second multiplier circuit; and a selection circuit for adding each of the transform weighted coefficients to selected elements of the array according to a selection scheme, such that when the processing of the set is completed, the elements of the array define the image.

Preferably the weighting factor is an inverse quantisation factor, and the weighted set of coefficients are inverse quantised. The plurality of transform weighting factors are preferably inverse discrete cosine transform weighting factors.

Preferably the selection circuit calculates an adding sequence for the elements of the array according to the sequential order of the transform function coefficients. The circuit preferably further comprises saturation and mismatch control circuits for performing saturation and mismatch control functions on the weighted set of coefficients.

In this way the transform function is performed in a manner such that the transform coefficients may be processed in any order and the inverse scan function is removed. This reduces the required memory size and the exchanges between the image processing circuit and memory as neither the data at the output of the variable length decoder, nor the re-ordered data need to be stored for the purpose of re-ordering the data.

Brief Description of the Drawings

An exemplary embodiment of the invention will now be described with reference to the drawings in which:-

FIG.1 shows a flow diagram of a prior art image processing method.

FIG.2 shows a flow diagram of an preferred image processing method in accordance with the invention.

FIGs.3 and 4 show a pair of scan matrices which define scanning patterns in accordance with the MPEG2 standard.

FIG.5 shows a preferred embodiment of an image processing circuit in accordance with the present invention.

Detailed Description of a Preferred Embodiment

The 2-dimensional inverse DCT is defined in the MPGE2 standard specification as:-

$$f(j,k) = \frac{2}{N} \sum_{u=0}^{N-1} \sum_{v=0}^{N-1} C(u)\, C(v)\, F(u,v) \cos\frac{(2j+1)u\pi}{2N} \cos\frac{(2k+1)v\pi}{2N} \qquad \text{Equation 1}$$

where

f(j,k) is a reconstructed picture element for each j and k,
N is the size of the block on which the I-DCT is performed,
u and v are the transform domain coordinates of the DCT coefficients,
j and k are the spatial coordinates of the picture elements,
F(u,v) is a DCT coefficient for each u and v, and
C(u) and C(v) are constants, being:

$$C(u), C(v) = \begin{cases} \dfrac{1}{\sqrt{2}} \text{ For } u, v = 0 \\[2em] 1 \ \text{ otherwise} \end{cases}$$

As this is a double summing of the weighted DCT coefficients, where they depend on the same pair of u and v values as their respective factors, the DCT coefficients may be handled one after the other, in any order, to compute each of the f(j,k) picture elements. Instead of processing a two-dimensional array of coefficients indexed with the u and v values, the I-DCT block may process a one-dimensional array of coefficient parametrised with a unique n index. This assumes that the information on the relationship of the pair of indices (u,v) versus n is passed to the I-DCT processor.

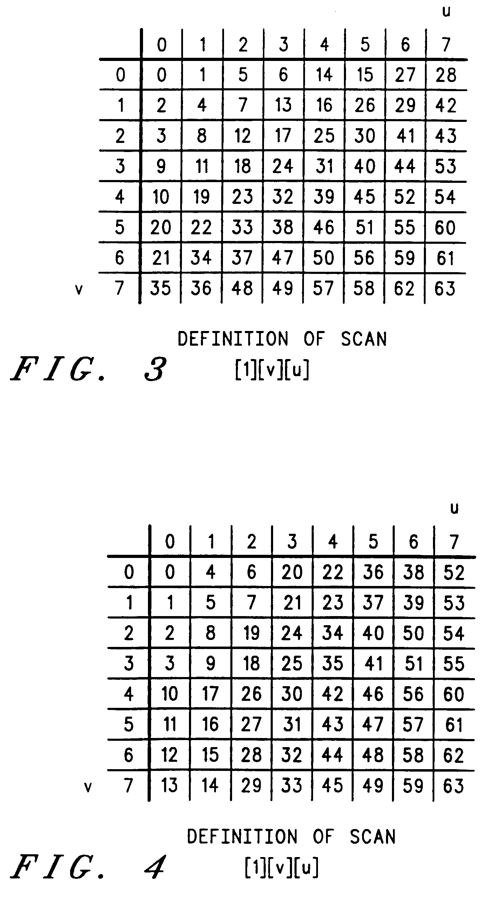

Referring to FIGs.3 and 4, the MPEG2 standard specification defines a relationship between block coordinates u,v and index n. FIG.3 shows a first scan pattern called scan [0][v][u] in which the scan tracks in a zig-zag manner starting at (0,0) and tracking diagonally in opposite directions with successive diagonals from top-left to bottom-right. FIG.4 shows a second, more complex scan pattern called scan [1][v][u].

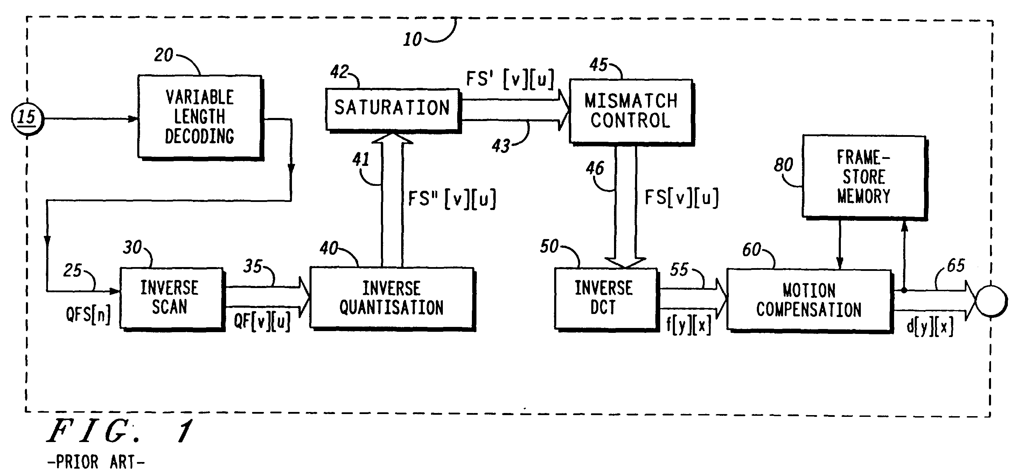

Referring to FIG. 1, there is shown a prior art image processing method 10. Coded data 15 is decoded by a variable length decoding block 20 to produce a quantised one-dimensional data stream QFS[n] 25, which is scan coded (i.e. is ordered according to one of the scan patterns of FIGs. 3 or 4). The QFS[n] 25 is then input to an inverse scan block 30, where they are inverse scanned (in dependence upon the scan pattern used) to produce a quantised two-dimensional array QF[v][u] 35. The quantised coefficients, QF[v][u] 35, need to be multiplied by a scale factor and by a weighting matrix. As the scale factor has a single value within a whole block of image, it does not depend either on u and v, or n. The weighting matrix is a two-dimensional array depending on u and v. The array QF[v][u] 35 is input to an inverse quantisation block 40 which performs an inverse quantisation function incorporating a weighting function, to produce a sequence of weighted DCT coefficients organised as a two-dimensional array F"[v][u] 41.

A saturation control function is performed on the two-dimensional array F"[v][u] 41 by block 42, to produce DCT coefficients F'[v,u] 43. A mismatch control function is then performed on the two-dimensional array F'[v][u] 43 by block 45, to produce DCT coefficients F[v,u] 46.

The I-DCT function is performed on DCT coefficients F[v,u] 46 at I-DCT block 50, producing f[y][x] 55, which are spatial domain image values.

The f[y][x] 55 are then input to a motion compensation block 60 where they are motion compensated to produce output image pixels d[y][x] 65. A frame store memory block 80 is coupled to the output image pixels d[y][x] 65, for storing a feedback image for use by the motion compensation block 60.

In the above prior art method, the 2-dimensional I-DCT is performed as a sequence of two 1-dimensional I-DCT's on the rows first (or the columns first) then the columns. This requires the availability of at least a complete row (or column) of coefficients before processing the 1-dimensional I-DCT function. Because of the zig-zag scan this storage amounts to having to store at least half the coefficients matrix in order to preserve the coefficients of the following rows for later processing. It is to be noted that the zero coefficients also have to be stored in the right order for the I-DCT. The MPEG-2 standard also defines run coefficients, wherein if a number of successive coefficients are identical, they are compressed by sending the value of the coefficient followed by the number of times that value is repeated. These are termed run coefficients and the number of repetitions is termed the run value. Thus the coded data 15 as defined according to the MPEG2 standard comprises a first value which is the value of the coefficient, and a second value, the run value, which indicates the number of repetitions.

This requires on-chip memory, since any off-chip memory will reduce the processing speeds, due to limited access time of external memory.

Also the processing time is proportional to the number of stored DCT coefficients, and requires some pipelining in order to store the coefficients produced by the variable length decoder from consecutive blocks, to compensate for the processing latency of the I-DCT block.

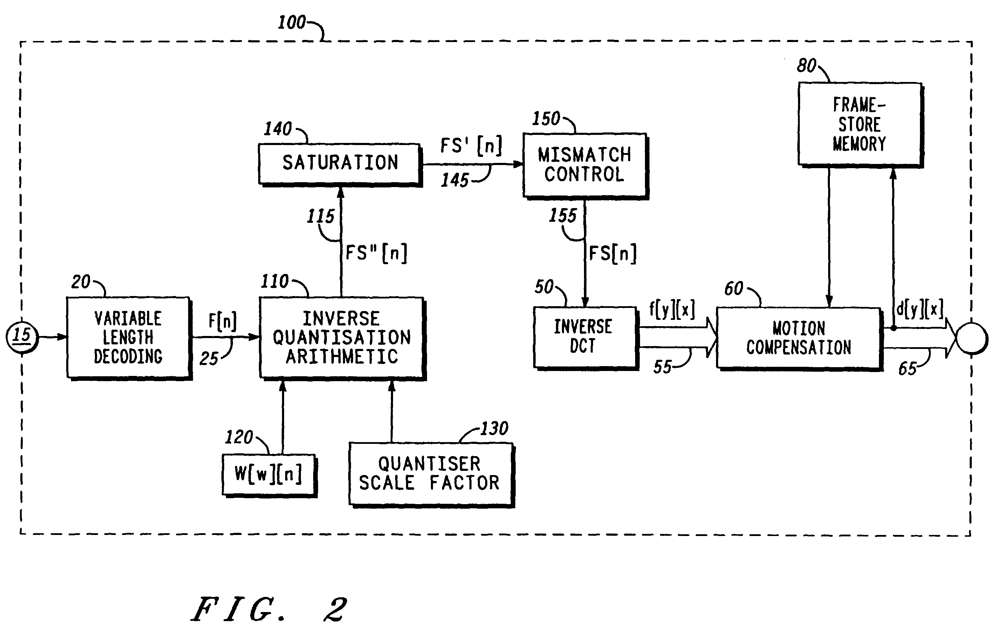

Referring to FIG.2, there is shown an image processing method 100 in accordance with a preferred embodiment of the invention. Coded data 15 is decoded by the variable length decoding block 20 as above to produce the quantised one-dimensional data stream QFS[n] 25. The QFS[n] 25 is then inverse quantised at block 110, according to a quantisation scale factor from block 130 and the W[w][n] matrix from block 120 to produce FS"[n] 115.

The saturation control function is then performed on the one dimensional FS"[n] 115 by block 140, to produce FS'[n] 145. The saturation of the coefficients do not depend on their order. The saturation control function may handle one-dimensional incoming arrays without any other considerations.

The mismatch control function is so arranged that only one F[v][u] coefficient, F[7][7] depends on all of the F[v][u] coefficients. This function is defined by:

$$\mathbf{sum} = \sum_{v=0}^{v<8} \sum_{u=o}^{u<8} \mathbf{F'[v][u]} \qquad \text{Equation 2}$$

F[v][u]=F'[v][u] for all u,v except u=v=7

$$\mathbf{F[7][7]} = \begin{cases} \mathbf{F'[7][7] \ if \ sum \ is \ odd} \\ \mathbf{F'[7][7] - 1 \ if \ F'[7][7] \ is \ odd \ and \ if \ sum \ is \ even} \\ \mathbf{F'[7][7] + 1 \ if \ F'[7][7] \ is \ even \ and \ if \ sum \ is \ even} \end{cases}$$

Here it has to be noted that, referring to FIGS. 3 and 4, the case [v][u] = [7][7] always corresponds to [n] = 63 whichever scan is used. Thus the mismatch control function as performed in block 150 may be re-written as:

$$\text{sum} = \sum_{n=0}^{n<64} FS'[n] \qquad \qquad \text{Equation 3}$$

FS[n]=FS'[n] for all n except n=63

$$FS[63] = \begin{cases} FS'[63] \text{ if sum is odd} \\ FS'[63] - 1 \text{ if } FS'[63] \text{ is odd and if sum is even} \\ FS'[63] + 1 \text{ if } FS'[63] \text{ is even and if sum is even} \end{cases} \qquad \text{Equation 4}$$

where the scan pattern has clearly no influence.

The mismatch control function is therefore performed in this way on the one-dimensional FS'[n] 145 by block 150, to produce FS[n] 155.

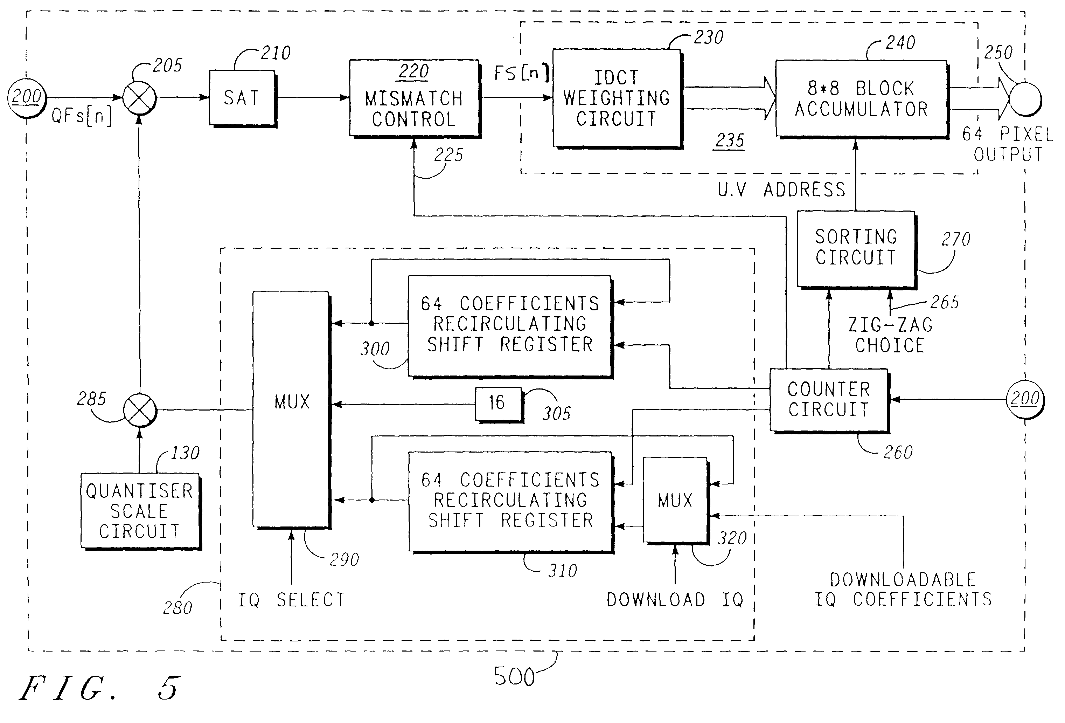

The one-dimensional array FS[n] is then processed by the I-DCT block 50, according to a selection scheme to produce the spatial domain image values f[y][x] 55. The function of the I-DCT block 50 and the selection scheme are further described below, with reference to the circuit of FIG.5. The spatial domain image values f[y][x] 55 are then input to the motion compensation block 60 to produce the output image pixels d[y][x] 65, which are also fed-back via the frame store memory 80 as in the prior art method above. Assuming that the relationship between n, u and v as shown in the scan patterns of FIGS. 3 and 4 is known, the weighting matrix may be handled as a one-dimensional array in the inverse quantisation arithmetic section. In the case of a pre-defined matrix W, it may be stored according to u and v indices. Thus, for an incoming QFS[n] coefficient, the appropriate W[w][n] element has to be accessed according to the [n] versus [v][u] relationship. The w index indicates which matrix has to be used. It is also possible to store a W matrix according to the n index corresponding to one given scan pattern. If this is the pattern used in the bit stream, the weighting matrix elements may be output in order that they are stored. If the second scan pattern is used in the bit stream, the matrix elements need to be accessed in an order depending on the scan [0] versus scan [1] relation which can be deduced from tables of FIGS. 3 and 4.

In the case of a download matrix it may even be simpler. Here a weighting matrix is downloaded through the bit stream in the same scan order as the DCT coefficients. This means that the matrix elements may just be stored and read in this order without any care to the [n] versus [v][u] relation.

Referring now also to FIG.5, there is shown an image processing circuit 500. An input 200 of the image processing circuit 500 receives a variable length decoded signal according to the MPEG2 standard (or any other system where a serial stream of coefficients is provided given an ordering that is not regular).

According to the MPEG2 standard, each block of coefficients is preceded by a binary codeword which identifies the next word as being n=0 (i.e. the beginning of a new block of 64 coefficients). An n index counter circuit 260 is coupled to receive the variable length decoded signal from the input 200, for providing an incrementing n count. The counter circuit 260 incorporates a 64 step counter. Detection of the binary codeword causes the counter circuit 260 to reset the counter to n=0, and then to increment the counter by the run value of each new coefficient word received at the input 200, up to n=63.

A quantisation circuit 280 provides the W[w][n] matrix values sequentially to a first multiplier 285, where they are multiplied with a quantisation scale factor from a quantisation scale circuit 275 to produce a set of quantisation weighting factors. The input coefficients received at input 200 are inverse quantised at a second multiplier 205 by the set of quantisation weighting factors.

The quantisation circuit 280 is arranged to provide appropriate quantisation coefficients depending upon the input coefficients received at input 200. The quantisation circuit 280 comprises a first MUX block 290 which multiplexes outputs from first and second recirculating shift registers 300 and 310 respectively, and from a fixed inverse quantization coefficient block 305 (=16). The first recirculating shift register 300 is coupled to receive the n index value from the index counter circuit 260, for holding a pre-defined set of inverse quantisation coefficients, appropriate for one particular arrangement of input coefficients to be received at input 200, and for providing these coefficients to the first MUX block 290 in dependence upon the n index value received.

The second recirculating shift register 310 is coupled to a second MUX block 320, and to the index counter circuit 260, for storing a set of downloaded quantisation coefficients and for providing these coefficients to the first MUX block 290 in dependence upon the n index value received. The second MUX block 320 has a downloadable IQ coefficient input, a fed-back input from the second recirculating shift register 310 and a download IQ control input. In this way a particular set of IQ coefficients, appropriate for one particular arrangement of input coefficients to be received at input 200, are downloaded into the second recirculating shift register 310 via the second MUX block 320. The fixed inverse quantization coefficient block 305, provides a fixed quantisation coefficient (=16) to the first MUX block 290.

The activity of the first MUX block 290 is controlled by an inverse quantisation select function, which selects one of the three coefficient inputs to the first MUX block 290 in dependence upon the arrangement of input coefficients to be received at the input 200.

The first recirculating shift register 300 is coupled to the index counter circuit 260, for providing a weighted coefficient depending on the order of the input coefficients, the weighted coefficient being an inverse quantisation value for each input coefficient. The second recirculating shift register 310 is coupled to the index counter circuit 260, and is also coupled to receive an output from a second MUX block 320, which combines inverse quantisation coefficients which are downloaded from an external source, with a download inverse quantisation control signal.

Saturation and mismatch control circuits 210 and 220 respectively are coupled to receive the inverse quantised signals from the second multiplier 205, for performing the saturation and mismatch control functions as described above. Since the saturation control function does not depend on coefficient order, the saturation circuit 210 does not require any external input other than the coefficients themselves. However, the mismatch control function, as stated above in equation 4, is given by:-

$$FS[63] = \begin{cases} FS'[63] \text{ if sum is odd} \\ FS'[63] - 1 \text{ if } FS'[63] \text{ is odd and if sum is even} \\ FS'[63] + 1 \text{ if } FS'[63] \text{ is even and if sum is even} \end{cases} \qquad \text{Equation 4}$$

Therefore, the mismatch control circuit 220 is coupled to receive the index counter value from the index counter circuit 260, in order to perform the saturation function on the one-dimensional data stream.

The I-DCT function is performed in block 235, by an I-DCT weighting circuit 230 and an 8*8 block accumulator 240. The I-DCT weighting circuit 230 is arranged for multiplying the arriving coefficients from the mismatch control circuit 220 by the I-DCT cosine weighting values.

Zero coefficients need not be processed at all since the accumulators need not be updated. Only the index [n] corresponding to [v][u] need be incremented to indicate that the I-DCT weighting coefficients were multiplied by zero. In the case of a run of zero values, the time that would have been spent processing these zero values is saved.

In case of non-zero coefficients, with a run value not equal to zero, the multiplication is only performed once and the accumulation of the same result is done directly into the 8*8 accumulator block 240 in the right positions.

A sorting circuit 270 is coupled to receive the linear index [n] from the index counter circuit 260, and a zig-zag index [v][u] 265. The zig-zag choice input 265 identifies which of the scan patterns of FIGs. 3 and 4 is applicable to the coefficients being accumulated in the accumulator block 240. Together with the n index count from the counter circuit 260, the sorting circuit 270 provides pixel indices which identify a particular pixel of an 8*8 image block. In this way the sorting circuit 270 provides a loading or addressing scheme for the incoming coefficients to the 8*8 block accumulator 240.

The 8*8 block accumulator 240 receives the values resulting from the multiplication operation, as well as the pixel indices from the sorting circuit 270, to accumulate these results in the right pixel value. At the end of 64 equivalent accumulations (as zero values are not really counted, this can be less than 64 cycles) the contents of the 8*8 accumulator block 240 are the f[y][x] 55 which together represent a motion-uncompensated pixel-block image. The f[y][x] 55 are then motion compensated by an external circuit (not shown in FIG.5), as described above and shown in block 60 of FIG.2, to produce output pixels d[y][x] 65, which are also fed-back via a frame store memory, as described above.

The way the compression algorithm of MPEG2 works allows for a large compression ratio. This is specifically represented by a large number of zero DCT coefficients coming in the bitstream. Most of these coefficients are in the spatial high frequency portion of the 8*8 matrix of blocks and are located towards the lower half of the matrix below the off-diagonal marked by (bottom to top) h0-g1-f2-e3-d4-c5-b6-a7

| a0 | a1 | a2 | a3 | a4 | a5 | a6 | a7 |
| b0 | b1 | b2 | b3 | b4 | b5 | b6 | b7 |
| c0 | c1 | c2 | c3 | c4 | c5 | c6 | c7 |
| d0 | d1 | d2 | d3 | d4 | d5 | d6 | d7 |

(continued)

| e0 | e1 | e2 | e3 | e4 | e5 | e6 | e7 |
|----|----|----|----|----|----|----|----|
| f0 | f1 | f2 | f3 | f4 | f5 | f6 | f7 |
| g0 | g1 | g2 | g3 | g4 | g5 | g6 | g7 |
| h0 | h1 | h2 | h3 | h4 | h5 | h6 | h7 |

This is therefore an advantage in the way this embodiment performs the I-DCT, in that the zero coefficients processing time is skipped, which clearly allows for higher throughput, and low latency, which will eliminate the need for large pipelining stages ahead of the I-DCT, therefore reducing hardware.

The efficiency of such a system is valuable in high throughput system requirements in cases such as HDTV where several I-DCT blocks would have to be used in case classical architectures are used. The I-DCT block is always one of the limiting factors in MPEG2 Encoders/Decoders.

It will be appreciated by a person skilled in the art that alternative embodiments to the one described above are possible. For example, the first and second recirculating shift registers 300 and 310 respectively could be replaced by a ROM for the fixed values, and RAM for the downloaded values.

## Claims

1. An image processing method for processing a sequential set of transform function coefficients (25) to produce an image (65), the sequential set of transform function coefficients being in a predetermined order, the method comprising the steps of:

    performing a weighting step (110) on each one of the set of coefficients in the predetermined order to produce a weighted set of coefficients (115) having the predetermined order;
    multiplying each one of the weighted set of coefficients by a plurality of transform weighting factors in the predetermined order to produce a plurality of transform weighted coefficients (55) for each one of the weighted set having the predetermined order; and,
    selectively adding each of the transform weighted coefficients to elements of an accumulator array according to a selection scheme, such that when the processing of the set is completed, the elements of the array define the image (65).

2. The image processing method according to claim 1 wherein the weighting step is an inverse quantisation step, and the weighted set of coefficients are inverse quantised.

3. The image processing method according to claim 1 or claim 2 wherein the plurality of transform weighting factors are inverse-discrete cosine transform values.

4. The image processing method according to any preceding claim wherein the selection scheme is calculated according to the sequential order of the transform function coefficients.

5. The image processing method according to any preceding claim further comprising the steps of saturation and mismatch control applied to the weighted set of coefficients.

6. An image processing circuit for processing a sequential set of transform domain coefficients (200) to produce an image (250), the sequential set of transform domain coefficients being in a predetermined order, the circuit comprising:

    a first multiplier stage (205) coupled to receive the set of coefficients (200), for sequentially multiplying each one of the set of coefficients by a weighting factor in the predetermined order to produce a set of weighted coefficients having the predetermined order;
    a second multiplier circuit (230) coupled to receive the set of weighted coefficients for sequentially multiplying each one of the set of weighted coefficients by a plurality of transform weighting factors in the predetermined order to produce a plurality of transform weighted coefficients for each one of the set, having the predetermined order;
    an accumulator array (240) of elements coupled to the second multiplier circuit (230); and,

a selection circuit (270) for adding each of the transform weighted coefficients to selected elements of the array according to a selection scheme, such that when the processing of the set is completed, the elements of the array define the image (250).

7. The image processing circuit according to claim 6 wherein the weighting factor is an inverse quantisation factor, and the weighted set of coefficients are inverse quantised.

8. The image processing circuit according to claim 6 or claim 7 wherein the plurality of transform weighting factors are inverse discrete cosine transform weighting factors.

9. The image processing circuit according to any one of claims 6 to 8 wherein the selection circuit calculates an adding sequence for the elements of the array according to the sequential order of the transform function coefficients.

10. The image processing circuit according to any one of claims 6 to 9 further comprising saturation and mismatch control circuits for performing saturation and mismatch control functions on the weighted set of coefficients.

**Patentansprüche**

1. Bildverarbeitungsverfahren zur Verarbeitung einer sequentiellen Menge von Transformationsfunktionskoeffizienten (25), um ein Bild (65) zu erzeugen, wobei die sequentielle Menge der Transformationsfunktionskoeffizienten in einer vorbestimmten Reihenfolge ist, wobei das Verfahren die folgenden Schritte umfaßt:

   • Durchführung eines Wichtungsschrittes (110) an jedem Koeffizienten aus der Menge der Koeffizienten in der vorbestimmten Reihenfolge, um eine gewichtete Menge der Koeffizienten (115) zu erzeugen, die die vorbestimmte Reihenfolge aufweist;
   • Multiplikation jedes Koeffizienten aus der Menge der gewichteten Koeffizienten mit einer Vielzahl von Transformationswichtungsfaktoren in der vorbestimmten Reihenfolge, um eine Vielzahl von gewichteten Transformationskoeffizienten (55) für jeden Koeffizienten aus der gewichteten Menge zu erzeugen, die die vorbestimmte Reihenfolge aufweist; und
   • selektive Addition jedes der gewichteten Transformationskoeffizienten zu Elementen eines Akkumulatordatenfelds nach einem Auswahlschema, so daß die Elemente des Datenfelds das Bild (65) definieren, wenn die Verarbeitung der Menge beendet ist.

2. Bildverarbeitungsverfahren nach Anspruch 1, wobei der Wichtungsschritt ein inverser Quantisierungsschritt ist und die gewichtete Menge der Koeffizienten invers quantisiert ist.

3. Bildverarbeitungsverfahren nach Anspruch 1 oder Anspruch 2, wobei die Vielzahl der Transformationswichtungsfaktoren invers-diskrete Kosinustransformationswerte sind.

4. Bildverarbeitungsverfahren nach einem der vorhergehenden Ansprüche, wobei das Auswahlschema in Übereinstimmung mit der sequentiellen Reihenfolge der Transformationsfunktionskoeffizienten berechnet ist.

5. Bildverarbeitungsverfahren nach einem der vorhergehenden Ansprüche, weiter die Schritte der Sättigungs- und Fehlanpassungssteuerung umfassend, die auf die gewichtete Menge der Koeffizienten angewendet werden.

6. Bildverarbeitungsschaltung zur Verarbeitung einer sequentiellen Menge von Transformationsbereichskoeffizienten (200), um ein Bild (250) zu erzeugen, wobei die sequentielle Menge der Transformationsbereichskoeffizienten in einer vorbestimmten Reihenfolge ist, wobei die Schaltung umfaßt:

   • eine erste Multipliziererstufe (205), die geschaltet ist, um die Menge der Koeffizienten (200) zu empfangen, zur sequentiellen Multiplikation jedes Koeffizienten aus der Menge der Koeffizienten mit einem Wichtungsfaktor in der vorbestimmten Reihenfolge, um eine Menge gewichteter Koeffizienten zu erzeugen, die die vorbestimmte Reihenfolge aufweist;
   • eine zweite Multipliziererschaltung (230), die geschaltet ist, um die Menge der gewichteten Koeffizienten zu empfangen, zur sequentiellen Multiplikation jedes Koeffizienten aus der Menge der gewichteten Koeffizienten mit einer Vielzahl von Transformationswichtungsfaktoren in der vorbestimmten Reihenfolge, um eine Vielzahl von gewichteten Transformationskoeffizienten für jeden Koeffizienten aus der Menge zu erzeugen, die die vorbestimmte Reihenfolge aufweist;

- ein Akkumulatordatenfeld (240) von Elementen, das an die zweite Multipliziererschaltung (230) geschaltet ist; und

- eine Auswahlschaltung (270) zur Addition jedes der gewichteten Transformationskoeffizienten zu ausgewählten Elementen des Datenfelds in Übereinstimmung mit einem Auswahlschema, so daß die Elemente des Datenfelds das Bild (250) definieren, wenn die Verarbeitung der Menge beendet ist.

7. Bildverarbeitungsschaltung nach Anspruch 6, wobei der Wichtungsfaktor ein inverser Quantisierungsfaktor ist und die gewichtete Menge der Koeffizienten invers quantisiert ist.

8. Bildverarbeitungsschaltung nach Anspruch 6 oder Anspruch 7, wobei die Vielzahl der Transformationswichtungsfaktoren invers-diskrete Kosinustransformationswichtungsfaktoren sind.

9. Bildverarbeitungsschaltung nach einem der Ansprüche 6 bis 8, wobei die Auswahlschaltung eine Additionsfolge für die Elemente des Datenfelds in Übereinstimmung mit der sequentiellen Reihenfolge der Transformationsfunktionskoeffizienten berechnet.

10. Bildverarbeitungsschaltung nach einem der Ansprüche 6 bis 9, weiter die Sättigungs- und Fehlanpassungssteuerschaltungen umfassend, zur Durchführung von Sättigungs- und Fehlanpassungssteuerfunktionen an der gewichteten Menge der Koeffizienten.

**Revendications**

1. Procédé de traitement d'image pour traiter un jeu séquentiel de coefficients de fonction de transformation (25) afin de produire une image (65), le jeu séquentiel de coefficients de fonction de transformation étant selon un ordre prédéterminé, le procédé comprenant les étapes de :

réalisation d'une étape de pondération (110) sur chaque coefficient du jeu de coefficients selon l'ordre prédéterminé afin de produire un jeu pondéré de coefficients (115) présentant l'ordre prédéterminé ;
multiplication de chaque coefficient du jeu pondéré de coefficients par une pluralité de facteurs de pondération de transformation selon l'ordre prédéterminé afin de produire une pluralité de coefficients pondérés de transformation (55) pour chaque coefficient du jeu pondéré présentant l'ordre prédéterminé ; et
addition de façon sélective de chacun des coefficients pondérés de transformation à des éléments d'un réseau d'accumulateur conformément à un schéma de sélection de telle sorte que lorsque le traitement du jeu est terminé, les éléments du réseau définissent l'image (65).

2. Procédé de traitement d'image selon la revendication 1, dans lequel l'étape de pondération est une étape de quantification inverse et les coefficients du jeu pondéré de coefficients sont quantifiés de façon inverse.

3. Procédé de traitement d'image selon la revendication 1 ou 2, dans lequel les facteurs de la pluralité de facteurs de pondération de transformation sont des valeurs de transformation cosinus discrète inverse.

4. Procédé de traitement d'image selon l'une quelconque des revendications précédentes, dans lequel le schéma de sélection est calculé conformément à l'ordre séquentiel des coefficients de fonction de transformation.

5. Procédé de traitement d'image selon l'une quelconque des revendications précédentes, comprenant en outre les étapes de commande de saturation et la désadaptation appliquées au jeu pondéré de coefficients.

6. Circuit de traitement d'image pour traiter un jeu séquentiel de coefficients de domaine de transformation (200) afin de produire une image (250), le jeu séquentiel de coefficients de domaine de transformation étant selon un ordre prédéterminé, le circuit comprenant:

un premier étage de multiplicateur (205) couplé pour recevoir le jeu de coefficients (200), pour multiplier séquentiellement chaque coefficient du jeu de coefficients par un facteur de pondération selon l'ordre prédéterminé afin de produire un jeu de coefficients pondérés présentant l'ordre prédéterminé ;
un second circuit de multiplicateur (230) couplé pour recevoir le jeu de coefficients pondérés, pour multiplier séquentiellement chaque coefficient du jeu de coefficients pondérés par une pluralité de facteurs de pondération de transformation selon l'ordre prédéterminé afin de produire une pluralité de coefficients pondérés de transformation pour chaque coefficient du jeu présentant l'ordre prédéterminé ;

un réseau d'accumulateur (240) d'éléments couplé au second circuit de multiplicateur (230); et

un circuit de sélection (270) pour additionner chacun des coefficients pondérés de transformation à des éléments sélectionnés du réseau conformément à un schéma de sélection de telle sorte que lorsque le traitement du jeu est terminé, les éléments du réseau définissent l'image (250).

7. Circuit de traitement d'image selon la revendication 6, dans lequel le facteur de pondération est un facteur de quantification inverse et les coefficients du jeu pondéré de coefficients sont quantifiés de façon inverse.

8. Circuit de traitement d'image selon la revendication 6 ou 7, dans lequel les facteurs de la pluralité de facteurs de pondération de transformation sont des facteurs de pondération de transformation cosinus discrète inverse.

9. Circuit de traitement d'image selon l'une quelconque des revendications 6 à 8, dans lequel le circuit de sélection calcule une séquence d'addition pour les éléments du réseau conformément à l'ordre séquentiel des coefficients de fonction de transformation.

10. Circuit de traitement d'image selon l'une quelconque des revendications 6 à 9, comprenant en outre des circuits de commande de saturation et de désadaptation pour réaliser des fonctions de commande de saturation et de désadaptation sur le jeu pondéré de coefficients.

*FIG. 1*

-PRIOR ART-

EP 0 847 651 B1

*FIG. 2*

EP 0 847 651 B1

|  | u 0 | 1 | 2 | 3 | 4 | 5 | 6 | 7 |
|---|---|---|---|---|---|---|---|---|
| 0 | 0 | 1 | 5 | 6 | 14 | 15 | 27 | 28 |
| 1 | 2 | 4 | 7 | 13 | 16 | 26 | 29 | 42 |
| 2 | 3 | 8 | 12 | 17 | 25 | 30 | 41 | 43 |
| 3 | 9 | 11 | 18 | 24 | 31 | 40 | 44 | 53 |
| 4 | 10 | 19 | 23 | 32 | 39 | 45 | 52 | 54 |
| 5 | 20 | 22 | 33 | 38 | 46 | 51 | 55 | 60 |
| 6 | 21 | 34 | 37 | 47 | 50 | 56 | 59 | 61 |
| v 7 | 35 | 36 | 48 | 49 | 57 | 58 | 62 | 63 |

DEFINITION OF SCAN

*FIG. 3*        [1][v][u]

|  | u 0 | 1 | 2 | 3 | 4 | 5 | 6 | 7 |
|---|---|---|---|---|---|---|---|---|
| 0 | 0 | 4 | 6 | 20 | 22 | 36 | 38 | 52 |
| 1 | 1 | 5 | 7 | 21 | 23 | 37 | 39 | 53 |
| 2 | 2 | 8 | 19 | 24 | 34 | 40 | 50 | 54 |
| 3 | 3 | 9 | 18 | 25 | 35 | 41 | 51 | 55 |
| 4 | 10 | 17 | 26 | 30 | 42 | 46 | 56 | 60 |
| 5 | 11 | 16 | 27 | 31 | 43 | 47 | 57 | 61 |
| 6 | 12 | 15 | 28 | 32 | 44 | 48 | 58 | 62 |
| v 7 | 13 | 14 | 29 | 33 | 45 | 49 | 59 | 63 |

DEFINITION OF SCAN

*FIG. 4*        [1][v][u]

FIG. 5

EP 0 847 651 B1